Europäisches Patentamt

European Patent Office

Office européen des brevets

(19)

(11) **EP 0 648 196 B1**

(12) **FASCICULE DE BREVET EUROPEEN**

(45) Date de publication et mention
de la délivrance du brevet:
**23.06.1999 Bulletin 1999/25**

(21) Numéro de dépôt: **94913656.8**

(22) Date de dépôt: **18.04.1994**

(51) Int Cl.⁶: **C03C 17/34**

(86) Numéro de dépôt international:
**PCT/FR94/00429**

(87) Numéro de publication internationale:
**WO 94/25410 (10.11.1994 Gazette 1994/25)**

(54) **VITRAGE MUNI D'UNE COUCHE FONCTIONNELLE CONDUCTRICE ET/OU BASSE EMISSIVE**

GLASSCHEIBE MIT EINER LEITENDEN PUNKTIONSSCHICHT UND/ODER MIT EINER
BESCHICHTUNG MIT NIEDRIGEM STARHLUNGSVERMÖGEN

GLAZING WITH FUNCTIONAL CONDUCTIVE AND/OR LOW EMISSIVE LAYER

(84) Etats contractants désignés:
**AT BE CH DE DK ES FR GB IE IT LI LU NL PT SE**

(30) Priorité: **29.04.1993 FR 9305056**

(43) Date de publication de la demande:
**19.04.1995 Bulletin 1995/16**

(73) Titulaire: **SAINT-GOBAIN VITRAGE**
**92400 Courbevoie (FR)**

(72) Inventeurs:
• **BALIAN, Pierre**
**F-75015 Paris (FR)**
• **OUDARD, Jean-François**
**F-60310 Thiescourt (FR)**
• **ZAGDOUN, Georges**
**F-92250 La Garenne-Colombes (FR)**

(74) Mandataire: **Renous Chan, Véronique**
**Saint-Gobain Recherche,**
**39, Quai Lucien Lefranc**
**F-93300 Aubervilliers (FR)**

(56) Documents cités:
EP-A- 0 114 282       EP-A- 0 441 705
EP-A- 0 501 632       EP-A- 0 511 044
EP-A- 0 518 755       EP-A- 0 530 676
EP-A- 0 544 577       EP-A- 0 573 325
WO-A-90/09883         FR-A- 2 439 167
GB-A- 2 136 316

## Description

L'invention a trait à un vitrage comprenant un substrat en verre muni d'une couche mince fonctionnelle, cette dernière présentant des propriétés de transparence, de conductivité électrique et/ou de basse émissivité.

Elle concerne également les procédés d'obtention d'un tel vitrage, en particulier à l'aide de techniques de pyrolyse ou de techniques utilisant le vide.

Ce type de couche fonctionnelle est notamment utilisé pour équiper les vitrages destinés au bâtiment : revêtu d'une couche basse-émissive, un substrat de verre permet de réduire l'émission dans l'infra-rouge lointain à travers le vitrage dont il fait partie, de l'intérieur vers l'extérieur du local. En réduisant les pertes énergétiques dues en partie à cette fuite de rayonnement, on améliore sensiblement le confort des habitants, notamment en hiver. Le substrat ainsi revêtu puis associé à un autre substrat par l'intermédiaire d'une lame de gaz, la couche basse-émissive se trouvant à l'intérieur, et notamment en face 3, (en comptant à partir de la face la plus extérieure) constitue un double-vitrage isolant très efficace.

Ces couches peuvent également équiper les vitrages destinés à l'automobile, de par leurs propriétés de conduction électrique, par exemple pour former des vitrages chauffants en prévoyant des arrivées de courant.

Les couches d'oxydes métalliques présentant ces propriétés sont par exemple des couches d'oxyde d'indium dopé à l'étain (ITO), d'oxyde de zinc dopé à l'aluminium (ZnO:Al), à l'indium (ZnO:In), à l'étain (ZnO:Sn), ou au fluor (ZnO:F), ou d'oxyde d'étain dopé au fluor ($SnO_2$:F).

Ces couches d'oxyde métallique peuvent être obtenues par différents procédés : par des procédés sous vide (évaporation thermique, pulvérisation cathodique, éventuellement à l'aide de magnétron) ou par pyrolyse de composés organo-métalliques projetés par un gaz vecteur sous forme liquide, solide ou gazeuse sur la surface du substrat en verre chauffé à une température élevée mais néanmoins inférieure à sa température de ramollissement. Ceux-ci, mis ainsi en contact avec une surface chaude, se décomposent en s'oxydant pour former sur celle-ci une couche d'oxyde métallique. Cette dernière technique est tout particulièrement avantageuse dans la mesure où elle permet d'envisager des dépôts directement sur le ruban de verre d'une ligne de fabrication type float, de manière continue.

Cependant, pour que ces couches atteignent un niveau de performance élevé, notamment en termes de valeurs d'émissivité et/ou de conduction électrique, leur épaisseur doit être d'au moins 180 nm voire au-delà de 400 nm, et usuellement comprise entre 300 et 450 nm.

Mais lorsqu'une couche mince présente de telles caractéristiques, elle confère au substrat qu'elle revêt un aspect en réflexion "côté couche" qui peut ne pas être très apprécié d'un point de vue esthétique.

Ainsi, par exemple, selon l'enseignement du brevet EP-B-0 125 153, une couche d'oxyde d'étain dopé au fluor $SnO_2$:F dont l'épaisseur, faible, est de 163 à 165 nm, déposée sur un substrat de verre float clair de 4 mm d'épaisseur confère à ce dernier une coloration en réflexion dans les bleus, coloration très appréciée actuellement aussi bien dans le domaine du bâtiment que de l'automobile.

Par contre, il a été constaté qu'une couche de même nature mais cette fois d'une épaisseur de 360 nm, donc une couche plus performante, confère à un même substrat un aspect en réflexion côté couche dans les rouges-verdâtres, soit une coloration que l'on peut considérer comme peu agréable à l'oeil. En outre, le substrat revêtu présente une valeur de réflexion lumineuse $R_L$ "côté couche" supérieure à 10 %, voire à 15%, et une pureté de couleur associée à cette réflexion pouvant dépasser 10 à 15%, ce qui implique un aspect bien coloré et réfléchissant du substrat "côté couche" (c'est ce côté qui est en général installé en face 3 d'un double vitrage posé dans un bâtiment, c'est donc lui qui est vu de l'extérieur lorsque l'on regarde la façade). On précise en effet que la valeur de la pureté indique l'intensité de la couleur : plus elle se rapproche de 0 %, plus elle paraît "lavée de blanc" et pastel. La couleur s'apprécie alors en relation avec la valeur de la réflexion lumineuse $R_1$.

Or, la tendance actuelle va plutôt vers une conception de vitrages, tout particulièrement ceux destinés aux bâtiments, qui soient peu réfléchissants, notamment vus de l'extérieur. Et cet aspect réfléchissant, brillant est d'autant plus gênant qu'il est associé à une teinte peu appréciée.

En outre, même si intrinsèquement une réflexion lumineuse $R_L$ d'environ 15 % n'est pas considérable, elle signifie cependant une chute certaine de la quantité d'énergie solaire transmise, notamment à l'intérieur du local, et donc fait diminuer de quelques pourcents le facteur solaire, c'est-à-dire le rapport de la somme de l'énergie solaire transmise et de l'énergie solaire absorbée par le vitrage puis ré-émise vers l'intérieur du local, à l'énergie solaire incidente. Ceci est un inconvénient sur le plan énergétique, notamment lorsque l'on souhaite incorporer un tel substrat dans un double-vitrage isolant afin de faire baisser les coûts de chauffage.

Une première solution à ce problème d'aspect en réflexion a été apportée par la demande de brevet français FR-A-2 684 095, et dont l'enseignement est incorporé dans la présente demande. Cette solution consiste à, tout d'abord, interposer entre le substrat et la couche "fonctionnelle" précédemment évoquée, qui a une épaisseur de 200 à 400 mm, un premier revêtement, dit revêtement "interne" dont l'épaisseur optique est comprise entre 50 et 75 nm. En outre, est disposé sur la couche un second revêtement, dit revêtement "externe" dont l'épaisseur optique est d'environ le quart de la longueur d'onde moyenne appartenant au domaine visible, de préférence centrée sur 550 nm, (l'épaisseur optique est le produit de l'épaisseur géométrique par l'indice de réfraction du revêtement considéré).

L'intérêt d'un tel empilement réside dans le fait de prévoir deux revêtements de part et d'autre de la couche fonctionnelle, ce qui autorise des optimisations fines de leurs caractéristiques, essentiellement épaisseurs optique et géométrique et indice de réfraction.

Une telle combinaison de revêtements sélectionnés judicieusement permet d'obtenir des substrats monolithiques (par exemple en verre float de 4 mm d'épaisseur) qui, une fois revêtus de l'empilement, présentent une réflexion lumineuse $R_L$ d'au plus 6%, accompagnée d'une pureté de coloration en réflexion en incidence normale d'au plus 3 %. Il présente en outre une émissivité d'au plus 0,2.

Monté en double-vitrage de manière à ce que les couches soient en face 3, celui-ci présente une réflexion lumineuse un peu plus élevée, (mais restant inférieure à 15 % néanmoins) avec une pureté de coloration en réflexion encore abaissée en incidence normale, et même d'au plus 5 %, même à angle d'incidence de mesure usuellement considérée comme défavorable. Son facteur solaire en incidence normale atteint au moins 0,76.

De telles valeurs de $R_L$ impliquent tout d'abord une suppression de l'essentiel de l'effet réfléchissant du vitrage, permettant d'augmenter globalement la valeur de la transmission énergétique $T_E$ et donc le facteur solaire.

Quant aux valeurs de pureté de coloration en réflexion, en association avec les valeurs de $R_L$ elles donnent aux vitrages, qu'ils soient monolithiques ou montés en double-vitrages, un aspect coloré peu intense, même en choisissant un angle d'incidence généralement peu propice et différent de l'incidence normale. On s'assure ainsi d'une meilleure homogénéité d'aspect des vitrages d'une façade de bâtiment vus de l'extérieur.

Par contre, il n'a pas été envisagé de contrôler et sélectionner la longueur d'onde dominante en réflexion "côté couches", c'est-à-dire de choisir la couleur en réflexion, même si elle se trouve de fait très atténuée et lavée de blanc du fait de la conjonction d'une pureté et d'une réflexion lumineuse faibles.

Il est connu du document EP-A-0 441 705, un substrat en verre muni d'une couche fonctionnelle dite semi-conductrice et présentant des propriétés de basse-émissivité entre lesquels se trouve une couche intermédiaire à base d'oxycarbure de silicium d'épaisseur géométrique comprise entre 50 et 100 nm et d'indice de réfraction compris entre 1,6 et 1,9.

Il est également connu du brevet GB-A-2 136 316, un substrat transparent muni d'une couche réductrice et/ou basse-émissive surmontée d'une couche de diélectrique d'épaisseur géométrique inférieure à 160 nm.

L'invention a alors pour but de mettre au point un vitrage qui optimise ce type d'empilement afin d'en préserver tous les avantages et, en outre, de pouvoir maîtriser le choix de couleur en réflexion, notamment de pouvoir obtenir une couleur en réflexion "côté couches" dans la gamme des bleus, couleur assez recherchée actuellement aussi bien dans le bâtiment que dans l'automobile comme agréable à l'oeil.

Le vitrage selon l'invention comprend un substrat transparent, notamment en verre, muni d'une couche dite "fonctionnelle" qui est transparente, conductrice et/ou basse-émissive à base d'oxyde(s) métallique(s).

Un revêtement "interne" est prévu entre substrat et couche fonctionnelle, revêtement présentant de préférence une épaisseur géométrique comprise entre 70 et 135 nm et un indice de réfraction compris entre 1,65 et 1,90.

Un second revêtement "externe" est disposé sur la couche fonctionnelle, revêtement présentant de préférence une épaisseur géométrique comprise entre 70 et 110 nm et un indice de réfraction compris entre 1,40 et 1,70.

La couche fonctionnelle, quant à elle, présente usuellement un indice de réfraction proche de 2 et une épaisseur comprise entre 300 et 450 nm, de préférence entre 330 et 410 nm, notamment d'environ 330, 360 ou 410 nm.

Cette nouvelle sélection de caractéristiques concernant les deux revêtements permet de garantir qu'un substrat ainsi revêtu puis monté en double-vitrage présente non seulement une pureté en réflexion "côté couches" inférieure ou égale à 5% et une réflexion lumineuse inférieure ou égale à 15%, mais en outre une longueur d'onde dominante de la couleur en réflexion se situant dans les bleus et notamment comprise entre 465 et 480 nm. Ces trois facteurs se conjuguent pour donner au vitrage un aspect en réflexion très favorable puisqu'à la fois peu réfléchissant et d'une couleur peu intense et très prisée.

Ainsi, de manière très surprenante, un vitrage peut être bleu en réflexion lorsqu'il est revêtu d'une couche fonctionnelle ayant une épaisseur qui, lorsque ladite couche est utilisée seule, correspond à une teinte tout autre. Et ce choix de longueur d'onde dominante obtenue par la combinaison de deux revêtements bien spécifiques ne s'effectue pas au détriment des valeurs de réflexion et de pureté, qui restent très faibles comme déjà mentionné, ce qui est extrêmement avantageux.

Deux natures de revêtement interne sont plus particulièrement adaptées. Celle-ci peut notamment être à base de silicium, d'oxygène et de carbone (Si, O, C) et/ou à base de silicium, d'oxygène et d'azote (Si, O, N), et obtenue de préférence par une technique de pyrolyse de précurseurs siliciés, notamment par voie gazeuse CVD (Chemical Vapor Deposition), comme enseigné dans la demande de brevet FR-A-2 677 639, ou par une technique de plasma-CVD comme enseigné dans la demande de brevet EP-A-413 617.

Mais le revêtement interne peut également être constitué d'un mélange d'oxydes métalliques dont la proportion relative permet d'ajuster l'indice de réfraction souhaité. Lesdits oxydes sont choisis notamment dans le groupe suivant : oxyde d'aluminium, oxyde de titane, oxyde d'étain, oxyde de zinc, oxyde d'indium, comme mentionné dans la demande de brevet français FR-A-2 670 199. Est alors de préférence utilisée la technique de pyrolyse de poudre de précurseurs organométalliques. On peut également et plus spécifiquement utiliser une couche intermédiaire à base d'oxydes d'aluminium et de titane ou d'étain, obtenue de préférence par pyrolyse par voie liquide de précurseurs organo-métalliques comme proposé dans la demande de brevet européen EP-A-465 309. De préférence l'épaisseur géométrique de ce revêtement est choisie comprise entre 90 et 120 nm.

La couche fonctionnelle est quant à elle avantageusement à base d'oxyde(s) métallique(s) dopé(s), appartenant au groupe comprenant l'oxyde d'indium dopé à l'étain (ITO), l'oxyde de zinc dopé à l'indium ZnO: In, au fluor ZnO:F, à l'aluminium ZnO:Al ou à l'étain ZnO: Sn, ainsi que l'oxyde d'étain dopé au fluor $SnO_2$:F, ce dernier oxyde constituant le mode de réalisation préféré de l'invention.

Cette couche peut également être fabriquée à l'aide de technique de pyrolyse, notamment de composés pulvérulents, particulièrement lorsque la couche est en $SnO_2$:F ou en ITO.

On peut fabriquer les couches de $SnO_2$:F à partir d'oxyde de dibutylétain (DBTO) en poudre et d'acide fluorhydrique anhydre gazeux, comme il est décrit dans le brevet FR-2 380 997, à partir de difluorure de dibutylétain (DBTF), éventuellement en mélange avec du DBTO comme décrit dans le document EP-A-178 956 ou EP-A-039 256.

En ce qui concerne les couches d'ITO, on peut les obtenir par exemple à partir de formiate d'indium et d'un composé de l'étain comme le DBTO décrit dans le document EP-A-192 009.

On peut aussi obtenir les couches de $SnO_2$:F par pyrolyse en phase gazeuse, notamment à partir d'un mélange de composés d'étain comme $(CH)_3)_2$ $SnCl_2$, $(C_4H_9)_2$ $SnCl_2$, $Sn(C_2H_5)_4$ et de composés organofluorés tels que $CCl_2F_2$, $CHClF_2$ et $CH_3CHF_2$ comme décrit dans la demande de brevet EP-A-027 403 ou bien encore à partir de monobutyl trichloroétain et d'un composé tel que le chlorodifluorométhane mentionné dans la demande de brevet EP-A-121 459.

Les couches de $SnO_2$:F peuvent aussi être obtenues en phase liquide à partir d'acétylacétonate d'étain ou de diméthylétain-2-propionate dans des solvants organiques appropriés comme décrits notamment dans le brevet FR-2 211 411.

Les couches d'oxyde de zinc dopé à l'indium ou à l'aluminium peuvent être obtenues par pyrolyse en phase vapeur, à partir de diéthylzinc ou d'acétate de zinc et de triéthylindium, chlorure d'indium ou triéthylaluminium, chlorure d'aluminium, comme décrit dans la demande de brevet EP-A-385 769.

Le revêtement externe est choisi de préférence de manière à ce que son épaisseur géométrique soit comprise entre 80 et 100 nm, et notamment d'environ 90 à 95 nm.

Comme précédemment mentionné, la gamme d'indices de réfraction préconisée pour ce revêtement s'étend entre 1,40 et 1,70. Dans cette gamme on peut choisir, pour constituer le revêtement, des composés de silicium comme l'oxyde de silicium $SiO_2$, ou des oxycarbures ou oxynitrures de silicium. L'oxyde de silicium a un indice de réfraction d'environ 1,45, tandis que les oxycarbures, notamment, ont un indice plus élevé, que l'on peut contrôler en modulant la teneur en carbone du revêtement.

Mais on peut également préférer des revêtements à base d'oxyde métallique ou de mélanges d'oxydes métalliques, par exemple choisis parmi l'oxyde d'aluminium, l'oxyde de titane, l'oxyde de zirconium ou l'oxyde de chrome.

Dans le premier cas, on peut obtenir le revêtement notamment en utilisant les techniques CVD déjà mentionnées pour fabriquer le revêtement interne.

On peut également utiliser une technique CVD utilisant comme précurseurs des composés organo-siliciés associés à un gaz oxydant comme de l'oxygène (ou tout autre gaz plus faiblement oxydant comme $H_2O$ ou $N_2O$) dans un gaz diluant inerte du type azote. Comme composés organo-siliciés appropriés, on peut citer diéthyle silane $Si(CH_3)_2$ $H_2$, l'hexaméthyldisilane $(CH_3)_3Si$-$Si(CH_3)_3$, le tétraéthylorthosilicate $Si(OC_2H_5)_4$, l'hexaméthyldisilaxane $(CH_3)_3$-$Si$-$O$-$Si(CH_3)_3$, l'octaméthylcyclotétrasiloxane $((CH_3)_2SiO)_4$, le tétraméthylcyclotétrasiloxane $(CH_3HSiO)_4$, ainsi que de l'hexaméthyldisilazane ou le tétraméthylsilane.

Quel que soit le type de précurseur silicié envisagé, on peut contrôler la teneur en carbone de la couche notamment en ajustant la proportion relative des différents composés précurseurs de celle-ci.

Dans le second cas, on peut choisir d'obtenir le revêtement d'oxyde(s) métallique(s) par une technique de dépôt par pyrolyses de poudre(s) de précurseurs organo-métalliques appropriés, comme il est décrit notamment dans la demande de brevet européen EP-0 500 445 et la demande de brevet français de numéro de dépôt 93-02 136 déposée le 25 Février 1993, demandes de brevet dont l'enseignement est incorporé à la présente demande. L'intérêt d'utiliser le dispositif de dépôt décrit dans la demande de brevet français précité est de pouvoir déposer consécutivement et aisément la couche fonctionnelle puis le revêtement externe.

Choisir pour le revêtement externe un indice de réfraction plus ou moins élevé dans la gamme 1,4-1,7 est en fait affaire de compromis. On a en effet constaté qu'à épaisseur optique égale, un indice plutôt élevé améliorait la tenue physico-chimique de l'empilement tandis qu'un indice plus faible améliorait ses performances optiques, notamment en optimisant son aspect anti-réfléchissant. (On rappelle que l'épaisseur optique est le produit de l'épaisseur géométrique par l'indice de réfraction d'une couche donnée). La sélection de l'indice du revêtement externe permet ainsi de mettre l'accent sur telle ou telle propriété, notamment en fonction de l'utilisation envisagée du vitrage portant l'empilement.

Une variante de l'invention consiste à incorporer le substrat ainsi revêtu dans un double-vitrage de manière à ce qu'une fois monté, les couches se trouvent en face 3. On peut alors avantageusement déposer en face 2, soit sur l'autre substrat transparent séparé du premier par une lame de gaz, un revêtement additionnel, notamment à bas indice de réfraction. Il peut s'agir par exemple d'un revêtement à base d'oxyde de silicium, qui peut alors notamment contribuer à abaisser la valeur de réflexion lumineuse $R_L$ dudit vitrage.

Tout type de technique de dépôt peut être utilisé pour procéder au dépôt de la couche fonctionnelle et de ses revêtements. Notamment, au moins une des couches, lorsqu'elle est à base d'oxyde(s) métallique(s) peut être déposée par une technique utilisant le vide, notamment par pulvérisation cathodique, éventuellement réactive en présence d'oxygène, à partir de cibles en alliage métallique ou en céramique de compositions appropriées.

On préfère cependant utiliser, pour le dépôt d'au moins une des couches, une technique de pyrolyse, par voie solide, liquide ou gazeuse comme déjà mentionné, car ce type de technique permet un dépôt en continu sur un ruban de verre.

Ainsi, un mode de réalisation préféré d'obtention de l'empilement selon l'invention consiste à effectuer le premier dépôt du revêtement interne par CVD sur le ruban de verre dans l'enceinte float, puis à déposer la couche fonctionnelle par pyrolyse, notamment de composés pulvérulents, entre l'enceinte float et l'étenderie, et enfin à déposer le revêtement externe, soit par CVD avant l'étenderie, ou dans l'étenderie, soit par pyrolyse de poudre(s) juste après le dépôt de la couche fonctionnelle.

D'autres détails et caractéristiques avantageuses de l'invention ressortent de la description ci-après d'exemples de réalisation non limitatifs, à l'aide de la figure suivante:

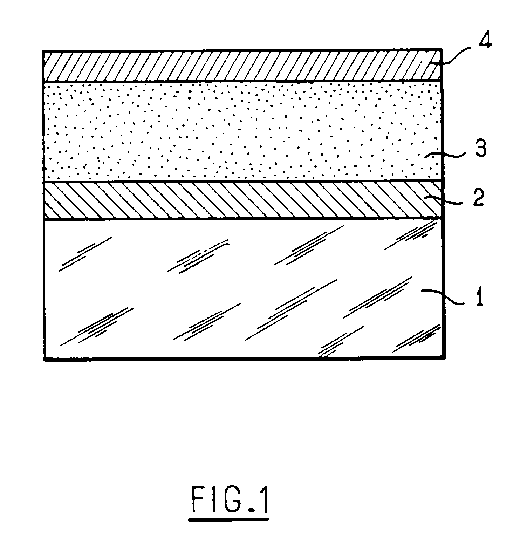

- Fig 1 : une coupe transversale d'un subtrat revêtu selon l'invention.

Pour mettre en pratique l'invention, et selon les exemples suivants, il a donc fallu ajuster les caractéristiques du revêtement interne 2 et du revêtement externe 4 en fonction de l'épaisseur de la couche fonctionnelle 3, afin d'obtenir la longueur d'onde dominante et donc la couleur résiduelle voulues.

## EXEMPLES 1 A 6

Les exemples suivants 1 à 6 se rapportent à un substrat 1 en verre clair silico-sodo-calcique de 4 mm d'épaisseur, surmonté d'un revêtement interne 2 à base de silicium, d'oxygène et de carbone et obtenue par CVD selon l'enseignement de la demande de brevet français pré-citée FR-A-2 677 639, d'une couche fonctionnelle 3 en SnO₂:F obtenue de manière connue par pyrolyse de poudre à partir de D.B.T.F. comme décrit dans les brevets précités et d'un revêtement externe 4 à base d'oxyde de silicium également obtenu par CVD de manière connue.

On précise que la représentation de la figure 1 est très schématique et ne respecte pas les proportions relatives d'épaisseurs des matériaux 1, 2, 3, 4 pour plus de clarté.

Toutes les mesures spectro-photométriques ont été effectuées en référence à l'illuminant $D_{65}$.

Les abréviations utilisées dans les tableaux 1 à 3 ci-après qui résument les caractéristiques en réflexion lumineuse des exemples ont la signification suivante : $R_L$ (%) réflexion lumineuse en pourcentage : pe la pureté d'excitation en pourcentage mesurée à incidence normale, et Lamba la longueur d'onde dominante en nanomètres dans le diagramme de chromaticité (x, y) ; c* la saturation avec $c^* = \sqrt{a^{*2}+b^{*2}}$ dans le système de colorimétrie (L*, a*, b*) et CR la couleur résiduelle en réflexion "côté couches". On précise que ces valeurs correspondent à celles mesurées pour un double-vitrage comportant le substrat 1 revêtu de l'empilement 2, 3, 4 en face 3 et séparé par une lame d'air de 12 mm d'un substrat nu mais identique au substrat 1.

L'exemple 1 est donné à titre comparatif.

## EXEMPLE 1:

Le revêtement interne 2 a une épaisseur géométrique de 100 nm et un indice de réfraction de 1,70. La couche fonctionnelle 3 a une épaisseur géométrique de 360 nm. Le revêtement externe en SiO₂ a un indice de réfraction de 1,45 et une épaisseur physique de 65nm.

Les exemples suivants 2 à 5 sont réalisés selon l'invention.

## EXEMPLE 2 :

Le revêtement interne 2 a une épaisseur géométrique de 115 nm et un indice de réfraction de 1,90. La couche fonctionnelle 3 a une épaisseur géométrique d'environ 350 nm. Le revêtement externe en SiO₂ a un indice de réfraction d'environ 1,45 et une épaisseur géométrique d'environ 90 nm.

## EXEMPLE 3 :

Le revêtement interne 2 a une épaisseur géométrique de 110 nm et un indice de réfraction de 1,77. La couche fonctionnelle 3 a une épaisseur géométrique de l'ordre de 375 nm. Le revêtement externe 4 est en $SiO_2$, d'indice de réfraction d'environ 1,45 et d'épaisseur géométrique d'environ 93 nm. L'émissivité est de 0,17.

**EXEMPLE 4 :**

Le revêtement interne 2 a une épaisseur géométrique de 130 nm et un indice de réfraction de 1,67. La couche fonctionnelle 3 a une épaisseur d'environ 352 nm. Le revêtement externe 4 est en $SiO_2$, d'épaisseur géométrique d'environ 93 nm et d'indice de réfraction d'environ 1,45. L'émissivité est de 0,18.

**EXEMPLE 5**

Le revêtement interne 2 a une épaisseur géométrique de 85 nm et un indice de réfraction de 1,70. La couche fonctionnelle 3 a une épaisseur de 360 nm. Le revêtement externe 4 est en $SiO_2$, d'indice de réfraction 1,45 et d'épaisseur géométrique d'environ 100 nm.

TABLEAU 1

| Exemple | $R_L$ | Pe | Lambda | C* | CR |
|---------|-------|-----|--------|-----|-------|
| 1 | 12,9 | 4,8 | 564 | - | rouge |
| 2 | 13,8 | 4 | 475 | 2,9 | bleu |
| 3 | 13,2 | 4 | 477 | 2,9 | bleu |
| 4 | 13,3 | 5 | 478 | 3,3 | bleu |
| 5 | 11.7 | 5,8 | 477 | - | bleu |

Il ressort de la comparaison de l'exemple 1 avec les exemples suivants qu'il est nécessaire pour obtenir la couleur bleue en réflexion désirée d'adopter des caractéristiques, notamment en termes d'épaisseurs, pour les revêtements aussi bien interne qu'externe qui soient très soigneusement sélectionnées selon l'invention . On vérifie par ailleurs que les exemples 2 à 4 présentent également des valeurs de $R_L$, Pe et c* très peu élevées, avec notamment des $R_L$ de l'ordre de 15 % et des saturations c* inférieures à 5 en double-vitrage.

L'aspect en réflexion des vitrages est donc très esthétique puisque tout à la fois pâle, anti-réfléchissant et agréable à l'oeil, choix esthétique qui ne s'opère pas au détriment des performances du vitrage, qui conserve des valeurs d'émissivité satisfaisantes.

**EXEMPLE 6 :**

Le revêtement interne 2 a une épaisseur géométrique de 110 nm et un indice de réfraction de 1,75. La couche fonctionnelle 3 a une épaisseur géométrique d'environ 360 nm et le revêtement externe 4 est en $SiO_2$ avec une épaisseur géométrique d'environ 93 nm.

On a regroupé dans le tableau 2 ci-dessous certaines valeurs photométriques, déjà explicitées, de ce substrat recouvert monté en double-vitrage, mais cette fois avec un angle Alpha de mesure de ces valeurs variant de 0° (incidence normale) à 40°.

TABLEAU 2

| Alpha | $R_L$ | Lambda | Pe | CR |
|-------|-------|--------|-----|------|
| 0° | 12,4 | 476 | | bleu |
| 20° | 12,5 | 476 | 5,3 | bleu |
| 40° | 13,6 | 430 | 3,5 | bleu |

Il ressort de ce tableau que, même si l'angle de mesure varie très notablement, l'aspect en réflexion reste très stable, notamment dans la gamme des bleus. Cela signifie que, très avantageusement, une façade, par exemple de bâtiment, équipée de tels vitrages, présentera un aspect très homogène, vue de l'extérieur, quel que soit l'angle de vision.

**EXEMPLES 7 ET 8**

Les exemples 7 et 8 sont similaires aux précédents, à la différence qu'ils n'utilisent pas de revêtement externe en oxyde de silicium $SiO_2$ mais plutôt un revêtement externe du type Si, O, C d'indice un peu plus élevé. Ce revêtement peut être obtenu par CVD indifféremment avec la même technique et les mêmes précurseurs que pour le revêtement interne (c'est-à-dire notamment du $SiH_4$ et de l'éthylène) or par CVD avec des précurseurs organo-métalliques du type hexaméthyldisilane ou tétraméthylsilane associés à des oxydants « doux » du type $N_2O$ ou $H_2O$. Dans les deux cas, on obtient l'indice voulu par sélection appropriée des proportions des différents précurseurs constitutifs du gaz réactif projeté.

**EXEMPLE 7**

Le revêtement interne 2 a une épaisseur géométrique de 95 nm et un indice de réfraction de 1,70. La couche fonctionnelle 3 a une épaisseur géométrique de 360 nm. Le revêtement externe 4 a une épaisseur géométrique de 88 nm et un indice de réfraction de 1.65.

**EXEMPLE 8**

Le revêtement interne 2 a une épaisseur géométrique de 90 nm et un indice de réfraction de 1,65. Les caractéristiques de la couche fonctionnelle et du revêtement externe sont celles de l'exemple 6.

Le tableau 3 ci-dessous indique les caractéristiques optiques relatives à ces deux exemples, mesurées de la même manière que pour les exemples 1 à 5 au tableau 1 (même montage en double-vitrage).

TABLEAU 3

| Exemple | $R_L$ | Pe | Lambda | CR |
|---|---|---|---|---|
| 7 | 13 | 470 | 3.9 | bleu |
| 8 | 13,1 | 471 | 4,3 | bleu |

Les performances optiques de ces deux empilements sont donc satisfaisantes, même si la valeur de $R_L$ est légèrement supérieure à celle obtenue avec les empilements des exemples précédents. Par contre, on a observé que ces deux empilements présenteraient une tenue physico-chimique et une durabilité plus élevées, ce qui est très avantageux.

## Revendications

1. Vitrage comprenant un substrat (1) transparent, notamment en verre muni d'une couche (3) fonctionnelle transparente, conductrice et/ou basse émissive à base d'oxyde(s) métallique(s), d'un revêtement "interne" (2) d'épaisseur géométrique comprise entre 70 nm et 135 nm et d'indice de réfraction compris entre 1,65 et 1,90 qui se trouve disposé entre la couche fonctionnelle (3) et le substrat (1) et d'un revêtement "externe" (4) d'épaisseur géométrique comprise entre 70 et 110 nm et d'indice de réfraction compris entre 1,40 et 1,70 qui se trouve disposé sur la couche fonctionnelle (3).

2. Vitrage selon la revendication 1, caractérisé en ce que la couche fonctionnelle (3) a un indice de réfraction proche de 2 et une épaisseur notamment comprise entre 300 et 450 nm, notamment entre 330 et 410 nm et de préférence d'environ 330, 360 ou 410 nm.

3. Vitrage selon l'une des revendications précédentes, caractérisé en ce que le revêtement externe (4) présente une épaisseur géométrique comprise entre 80 et 100 nm, notamment d'environ 90 à 95 nm.

4. Vitrage selon l'une des revendications précédentes, caractérisé en ce que le revêtement interne (2) présente une épaisseur géométrique comprise entre 90 et 120 nm.

5. Vitrage selon l'une des revendications précédentes, caractérisé en ce que la couche fonctionnelle (3) comporte au moins un oxyde métallique dopé appartenant au groupe comprenant l'oxyde d'indium dopé à l'étain ITO, l'oxyde de zinc dopé à l'indium ZnO:In, au fluor, ZnO:F, à l'aluminium ZnO:Al ou à l'étain ZnO:Sn, l'oxyde d'étain dopé au fluor $SnO_2$:F.

6. Vitrage selon l'une des revendications précédentes, caractérisé en ce que le revêtement interne (2) est composé d'au moins un des oxydes métalliques appartenant au groupe comprenant l'oxyde de titane, d'aluminium, de zinc, d'étain et d'indium.

7. Vitrage selon l'une des revendications précédentes, caractérisé en ce que le revêtement interne (2) est composé d'un oxycarbure et/ou oxynitrure de silicium.

8. Vitrage selon l'une des revendications précédentes, caractérisé en ce que le revêtement externe (4) est un composé du silicium choisi parmi l'oxyde de silicium, l'oxycarbure et/ou l'oxynitrure de silicium.

9. Vitrage selon l'une des revendications 1 à 7, caractérisé en ce que le revêtement externe 4 est choisi parmi l'un au moins des oxydes métalliques appartenant au groupe de l'oxyde d'aluminium, l'oxyde de titane, l'oxyde de zirconium, l'oxyde de chrome.

10. Vitrage selon l'une des revendications précédentes, caractérisé en ce qu'il est un vitrage multiple, notamment un double-vitrage associant à un autre substrat transparent le susbstrat (1) muni de ses couches (2, 3, 4), ledit double-vitrage présentant une couleur de réflexion côté couches dont la saturation est inférieure à 5 et dont la longueur d'onde dominante, comprise notamment entre 465 et 480 nm, appartient à la gamme de bleus ainsi qu'une valeur de réflexion lumineuse $R_L$ inférieure ou égale à 15%.

11. Vitrage selon l'une des revendications précédentes, caractérisé en ce qu'il s'agit d'un double-vitrage associant au substrat (1) à couches (2, 3, 4) un autre substrat en verre, lesdites couches (2, 3, 4) se trouvant en face 3 et l'autre substrat étant optionnellement revêtu en face 2 d'une couche à bas indice de réfraction type oxyde de silicium.

12. Procédé d'obtention du vitrage conforme aux revendications précédentes, caractérisé en ce qu'au moins un des revêtements (2, 4) et/ou la couche fonctionnelle (3) à base d'oxyde(s) métallique(s) est déposé par une technique utilisant le vide, en particulier par une technique de pulvérisation cathodique, éventuellement réactive en présence d'oxygène, à partir de cibles en alliage métallique ou en céramique de compositions appropriées.

13. Procédé d'obtention du vitrage conforme aux revendications 1 à 11, caractérisé en ce qu'au moins un des revêtements (2, 4) et/ou la couche fonctionnelle (3) est déposé par une technique de pyrolyse.

14. Procédé d'obtention du vitrage conforme aux revendications 1 à 11, caractérisé en ce que l'on dépose le revêtement interne (2) par vaporisation chimique CVD de précurseurs organo-métalliques ou siliciés, ou par pyrolyse de poudre(s) de précurseurs organo-métalliques.

15. Procédé d'obtention du vitrage conforme à l'une des revendications 1 à 11, caractérisé en ce que la couche fonctionnelle (3) est déposée par une technique de dépôt par pyrolyse de poudre de précurseurs organo-métalliques.

16. Procédé d'obtention du vitrage conforme à l'une des revendications 1 à 11, caractérisé en ce que le revêtement externe (4) est déposé par une technique de dépôt par vaporisation chimique CVD de précurseurs siliciés s'il est en composé(s ) de silicium ou par une technique de dépôt par pyrolyse de poudre(s) s'il est en oxyde(s) métallique(s).

**Patentansprüche**

1. Verglasung, welche ein insbesondere aus Glas bestehendes transparentes Substrat (1) umfaßt, das mit einer transparenten leitfähigen und/oder niedrig emittierenden Funktionsschicht (3) auf der Basis von Metalloxid(en), einer "inneren" Beschichtung (2) mit einer geometrischen Dicke von 70 bis 135 nm und einem Brechungsindex von 1,65 bis 1,90, die zwischen der Funktionsschicht (3) und dem Substrat (1) angeordnet ist, und einer "äußeren" Beschichtung (4) mit einer geometrischen Dicke von 70 bis 110 nm und einem Brechungsindex von 1,40 bis 1,70, die auf der Funktionsschicht (3) angeordnet ist, versehen ist.

2. Verglasung nach Anspruch 1, **dadurch gekennzeichnet, daß** die Funktionsschicht (3) einen Brechungsindex von etwa 2 und eine Dicke von insbesondere 300 bis 450 nm, speziell 330 bis 410 nm und vorzugsweise etwa 330, 360 oder 410 nm besitzt.

3. Verglasung nach einem der vorhergehenden Ansprüche, **dadurch gekennzeichnet, daß** die geometrische Dicke der äußeren Beschichtung (4) 80 bis 100 nm und insbesondere etwa 90 bis 95 nm beträgt.

4. Verglasung nach einem der vorhergehenden Ansprüche, **dadurch gekennzeichnet, daß** die geometrische Dicke der inneren Beschichtung (2) 90 bis 120 nm beträgt.

5. Verglasung nach einem der vorhergehenden Ansprüche, **dadurch gekennzeichnet, daß** die Funktionsschicht (3) mindestens ein dotiertes Metalloxid enthält, das zu der Gruppe gehört, die mit Zinn dotiertes Indiumoxid, ITO, und Zinkoxid, das mit Indium, ZnO:In, Fluor, ZnO:F, Aluminium, ZnO:Al, oder Zinn, ZnO:Sn, dotiert ist, umfaßt.

6. Verglasung nach einem der vorhergehenden Ansprüche, **dadurch gekennzeichnet, daß** die innere Beschichtung (2) aus mindestens einem der Metalloxide aufgebaut ist, welche zu der Gruppe gehören, die Titan-, Aluminium-, Zink-, Zinn- und Indiumoxid umfaßt.

7. Verglasung nach einem der vorhergehenden Ansprüche, **dadurch gekennzeichnet, daß** die innere Beschichtung (2) aus einem Siliciumcarbidoxid und/oder Siliciumnitridoxid aufgebaut ist.

8. Verglasung nach einem der vorhergehenden Ansprüche, **dadurch gekennzeichnet, daß** die äußere Beschichtung (4) eine Siliciumverbindung ist, die aus Siliciumoxid, Siliciumcarbidoxid und/oder Siliciumnitridoxid ausgewählt ist.

9. Verglasung nach einem der Ansprüche 1 bis 7, **dadurch gekennzeichnet, daß** die äußere Beschichtung (4) aus mindestens einem der Metalloxide ausgewählt ist, welche zu der Gruppe gehören, die Aluminiumoxid, Titanoxid, Zirconiumoxid und Chromoxid umfaßt.

10. Verglasung nach einem der vorhergehenden Ansprüche, **dadurch gekennzeichnet, daß** sie eine Mehrfachverglasung ist, insbesondere eine Zweifachverglasung, in welcher das mit seinen Schichten (2, 3, 4) versehene Substrat (1) mit einem anderen transparenten Substrat verbunden ist, wobei diese Zweifachverglasung auf der Schichtseite unter reflektiertem Licht eine Farbe, deren Sättigung kleiner als 5 ist und deren dominierende Wellenlänge, insbesondere 465 bis 480 nm, zum blauen Bereich gehört, und einen Lichtreflexionsgrad $R_L$ von kleiner oder gleich 15 % aufweist.

11. Verglasung nach einem der vorhergehenden Ansprüche, **dadurch gekennzeichnet, daß** sie eine Zweifachverglasung ist, in welcher das mit Schichten (2, 3, 4) versehene Substrat (1) mit einem anderen Glassubstrat verbunden ist, wobei sich die Schichten (2, 3, 4) auf Position 3 befinden und das andere Substrat wahlweise auf Position 2 mit einer Schicht mit niedrigem Brechungsindex wie Siliciumoxid beschichtet ist.

12. Verfahren zur Herstellung einer Verglasung gemäß den vorhergehenden Ansprüchen, **dadurch gekennzeichnet, daß** mindestens eine der Beschichtungen (2, 4) und/oder die Funktionsschicht (3) auf der Basis von Metalloxid(en) durch ein Vakuumverfahren, insbesondere ein - gegebenenfalls reaktives in Gegenwart von Sauerstoff - Kathodenzerstäubungsverfahren ausgehend von Targets aus einer Metallegierung oder aus Keramik mit geeigneter Zusammensetzung, aufgebracht wird.

13. Verfahren zur Herstellung einer Verglasung gemäß den Ansprüchen 1 bis 11, **dadurch gekennzeichnet, daß** mindestens eine der Beschichtungen (2, 4) und/oder die Funktionsschicht (3) durch ein Pyrolyseverfahren aufgebracht wird.

14. Verfahren zur Herstellung einer Verglasung gemäß den Ansprüchen 1 bis 11, **dadurch gekennzeichnet, daß** die innere Beschichtung (2) durch chemisches Aufdampfen, CVD, metallorganischer oder siliciumhaltiger Vorläufer oder durch Pulverpyrolyse metallorganischer Vorläufer aufgebracht wird.

15. Verfahren zur Herstellung einer Verglasung gemäß einem der Ansprüche 1 bis 11, **dadurch gekennzeichnet, daß** die Funktionsschicht (3) durch ein Verfahren zur Beschichtung mittels Pulverpyrolyse metallorganischer Vorläufer aufgebracht wird.

16. Verfahren zur Herstellung einer Verglasung gemäß einem der Ansprüche 1 bis 11, **dadurch gekennzeichnet, daß** die äußere Beschichtung (4) durch ein Beschichtungsverfahren mittels chemisches Aufdampfen, CVD, siliciumhaltiger Vorläufer, wenn sie aus (einer) Siliciumverbindung(en) besteht, oder durch ein Beschichtungsverfahren mittels Pulverpyrolyse, wenn sie aus (einem) Metalloxid(en) besteht, aufgebracht wird.

**Claims**

1. Glazing comprising a transparent substrate (1), more particularly of glass having a conductive and/or low emissive, transparent, functional layer (3) based on metal oxide(s), an "internal" coating (2) with a geometrical thickness between 70 nm and 135 nm and a refractive index between 1.65 and 1.90, which is positioned between the functional layer (3) and the substrate (1) and an "external" coating (4) with a geometrical thickness between 70 and 110 nm and a refractive index between 1.40 and 1.70 and which is placed on the functional layer (3).

2. Glazing according to claim 1, characterized in that the functional layer (3) has a refractive index close to 2 and a thickness more particularly between 300 and 450 nm, more specifically between 330 and 410 nm and preferably approximately 330, 360 or 410 nm.

3. Glazing according to one of the preceding claims, characterized in that the external coating (4) has a geometrical thickness between 80 and 100 nm, more particularly approximately 90 to 95 nm.

4. Glazing according to one of the preceding claims, characterized in that the internal coating (2) has a geometrical thickness between 90 and 120 nm.

5. Glazing according to one of the preceding claims, characterized in that the functional layer (3) incorporates at least one doped metal oxide belonging to the group including tin-doped indium oxide ITO, indium-doped zinc oxide Zn0:In, fluorine-doped zinc oxide Zn0:F, aluminium-doped zinc oxide Zn0: Al or tin-doped zinc oxide Zn0:Sn, as well as fluorine-doped tin oxide $Sn0_2$:F.

6. Glazing according to one of the preceding claims, characterized in that the internal coating (2) is constituted by at least one of the metal oxides belonging to the group including titanium, aluminium, zinc, tin or indium oxide.

7. Glazing according to one of the preceding claims, characterized in that the internal coating (2) is constituted by a silicon oxycarbide and/or oxynitride.

8. Glazing according to one of the preceding claims, characterized in that the external coating (4) is a compound of silicon chosen from among silicon oxide, silicon oxycarbide and/or silicon oxynitride.

9. Glazing according to one of the claims 1 to 7, characterized in that the external coating (4) is chosen from among at least one of the metal oxides belonging to the group aluminium oxide, titanium oxide, zirconium oxide and chromium oxide.

10. Glazing according to one of the preceding claims, characterized in that it is a multiple glazing, more particularly a double glazing combining with another transparent substrate the substrate (1) provided with its layers (2, 3, 4), said double glazing having on the layer side a reflection colour, whose saturation is below 5 and whose dominant wavelength, more particularly between 465 and 480 nm, belongs to the blue range, as well as a light reflection value $R_L$ equal to or below 15%.

11. Glazing according to one of the preceding claims, characterized in that it is a double glazing combining with the substrate (1) having layers (2, 3, 4) another glass substrate, said layers (2, 3, 4) being on face 3 and the other substrate being optionally coated on face 2 with a layer having a low refractive index of the silicon oxide type.

12. Process for obtaining the glazing according to the preceding claims, characterized in that at least one of the coatings (2, 4) and/or the functional layer (3) based on metal oxide(s) is deposited by a method using vacuum, particularly by a cathodic sputtering method, optionally of the reactive type and in the presence of oxygen, from targets of a metal alloy or a ceramic having appropriate compositions.

13. Process for obtaining the glazing according to claims 1 to 11, characterized in that at least one of the coatings (2, 4) and/or the functional layer (3) is deposited by a pyrolysis method.

14. Process for obtaining the glazing according to claims 1 to 11, characterized in that the internal coating (2) is deposited by the chemical vapour deposition (CVD) of organometallic or silicon precursors, or by pyrolysis of powder(s) of organometallic precursors.

15. Process for obtaining the glazing according to one of the claims 1 to 11, characterized in that the functional layer (3) is deposited by the pyrolytic deposition of a powder or organometallic precursors.

16. Process for obtaining the glazing according to one of the claims 1 to 11, characterized in that the external coating (4) is deposited by a chemical vapour deposition (CVD) process of silicon precursors if it is of silicon compound(s), or by a powder pyrolysis deposition process if it is of metal oxide(s).

FIG.1